(19)

**Europäisches Patentamt**

**European Patent Office**

**Office européen des brevets**

(11) **EP 2 740 530 B1**

(12) **FASCICULE DE BREVET EUROPEEN**

(45) Date de publication et mention
de la délivrance du brevet:
**01.11.2017 Bulletin 2017/44**

(51) Int Cl.:
**B01J 8/22** *(2006.01)* **C10G 2/00** *(2006.01)*

(21) Numéro de dépôt: **13306575.5**

(22) Date de dépôt: **18.11.2013**

(54) **Procédé d'injection d'additif dans un réacteur de synthèse d'hydrocarbures à partir de gaz de synthèse permettant de contrôler et maintenir une concentration homogène en catalyseur dans le mélange réactionnel tri-phasique**

Zusatzstoff-Zuführungsverfahren in einen Reaktor zur Synthese von Kohlenwasserstoffen aus Synthesegas zur Überwachung und Einhaltung einer homogenen Katalysator Konzentration im Slurry-Reaktor

Additive injection method into a reactor for a hydrocarbon synthesis from synthesis gas in order to monitor and maintain a homogenous concentration of catalyst in the reaction slurry

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2012 FR 1203302**

(43) Date de publication de la demande:
**11.06.2014 Bulletin 2014/24**

(73) Titulaires:
• **IFP Energies nouvelles**
**92500 Rueil-Malmaison (FR)**
• **ENI S.p.A.**
**00144 Roma (IT)**

(72) Inventeurs:
• **Heraud, Jean-Philippe**
**69780 Saint Pierre de Chandieu (FR)**
• **Forret, Ann**
**69420 Longes (FR)**
• **Gazarian, Jeremy**
**69420 Condrieu (FR)**
• **Marion, Marie-Claire**
**69390 Vernaison (FR)**
• **Lecocq, Vincent**
**69530 Orlienas (FR)**
• **Boucher, Sébastien**
**78400 Chatou (FR)**
• **Della Torre, Chiara**
**20161 Milano (IT)**
• **Mignone, Elsa**
**20900 Monza (IT)**

(56) Documents cités:
**EP-A1- 2 199 369      EP-A1- 2 348 092**
**US-A- 3 498 908      US-A- 4 396 495**
**US-A- 5 660 977      US-A- 5 922 191**

• **Mohammad Fadhil Abid ET AL: "Hydrodynamic Characteristics Effect of Foam Control in Multiphase Column", , 23 mai 2011 (2011-05-23), XP055074272, Extrait de l'Internet: URL:http://www.uotechnology.edu.iq/dep-che m-eng/PAPERS/mohamed%20fadel%20%20x.pd f [extrait le 2013-08-06] & Mohammad Fadhil Abid ET AL: "Hydrodynamic Characteristics Effect of Foam Control in Multiphase Column", , 23 mai 2011 (2011-05-23), XP055074274, Extrait de l'Internet: URL:http://www.uotechnology.edu.iq/dep-che m-eng/PAPERS/mohamed%20fadel%20%20x.pd f [extrait le 2013-08-06]**
• **PINO L Z ET AL: "EFFECT OF OPERATING CONDITIONS ON GAS HOLDUP IN SLURRY BUBBLE COLUMNS WITH A FOAMING LIQUID", CHEMICAL ENGINEERING COMMUNICATIONS, vol. 117, no. 1, 1992, pages 367-382, XP008164002, ISSN: 0098-6445, DOI: 10.1080/00986449208936076 [extrait le 2007-11-06]**

## Description

## DOMAINE TECHNIQUE DE L'INVENTION

La présente invention concerne le domaine de la synthèse d'hydrocarbures à partir d'une charge comprenant du monoxyde de carbone (CO), de l'hydrogène ($H_2$) et éventuellement du dioxyde de carbone ($CO_2$), appelée par la suite gaz de synthèse.

Le procédé selon l'invention permet d'optimiser le fonctionnement d'une unité de synthèse d'hydrocarbures à partir de gaz de synthèse (également appelée synthèse Fischer-Tropsch), en améliorant l'hydrodynamique de l'écoulement gaz/liquide/solide dans la section réactionnelle.

## ART ANTÉRIEUR

La réaction de synthèse Fischer-Tropsch, est connue depuis le début du $XX^{ème}$ siècle. Cette synthèse produit principalement des alcanes, et de façon plus minoritaire des alcènes et des alcools, avec une distribution en longueur de chaîne des hydrocarbures très large (de $C_1$ à plus de $C_{90}$).

Le gaz de synthèse est généralement produit à partir de gaz naturel par réformage autotherme, vaporéformage, ou oxydation partielle. D'autres sources peuvent permettre de produire du gaz de synthèse, par exemple le résidu sous vide, le charbon, le coke de pétrole, la biomasse, les déchets, prises seules ou en mélange adapté. Un traitement du gaz de synthèse est parfois nécessaire d'une part pour ajuster le ratio $H_2$/CO, et d'autre part pour éliminer des composés néfastes au catalyseur mis en oeuvre dans la synthèse Fischer-Tropsch, tels que par exemple les composés soufrés, chlorés, les composés carbonylés métalliques.

Selon l'origine du gaz de synthèse et/ou les produits désirés, on utilise des catalyseurs, dénommés catalyseurs Fischer-Tropsch, dont la phase active contient du fer ou du cobalt, qui peut être associée à des promoteurs métalliques pour améliorer la sélectivité et l'activité du catalyseur.

La synthèse Fischer-Tropsch est généralement opérée à des températures comprises entre 200 °C et 300 °C et à des pressions comprises entre 1 MPa et 8 MPa, préférentiellement entre 2 MPa et 4 MPa.

La synthèse Fischer-Tropsch est mise en oeuvre dans une section réactionnelle comprenant un ou plusieurs réacteurs adaptés, dont la technologie est connue de l'homme de métier. Il peut s'agir, par exemple, de réacteurs à lit fixe multitubulaire, ou de réacteurs de type colonne à bulles, ou de réacteurs micro-structurés avec le catalyseur déposé dans ou sur les parois de microcanaux.

La mise en oeuvre dans un ou plusieurs réacteurs de type colonne à bulles est le mode de réalisation préféré car la synthèse est fortement exothermique, avec une enthalpie de réaction de l'ordre de -170 kJ/mol. Cette mise en oeuvre permet, entre autres, d'améliorer le contrôle thermique du réacteur. Ce mode de réalisation présente également l'avantage de créer peu de perte de charge et d'utiliser des grains de catalyseurs de petites tailles pour réduire les limitations au transfert de matière dans le grain.

Le réacteur de type colonne à bulles, connu en anglais sous l'appellation de "slurry bubble column", est un réacteur triphasique dans lequel le catalyseur, finement divisé, est mis en suspension dans une phase liquide, le mélange di-phasique dudit catalyseur et de ladite phase liquide étant communément appelé "slurry", par la circulation de la phase gaz du bas vers le haut dudit réacteur, comme décrit par exemple dans les brevets US5252613, EP0820806 et EP0823470.

Les produits légers, en phase gaz dans les conditions d'opération de la section réactionnelle, sont séparés dans une section de séparation gaz/liquide, tandis que les composés hydrocarbonés plus lourds sont séparés du catalyseur dans une section de séparation cires/catalyseur, qui permet d'extraire les cires et de recycler le catalyseur dans la section réactionnelle afin de maintenir l'inventaire de catalyseur dans ladite section.

Une telle séparation peut être réalisée par filtration, les éléments filtrant étant disposés dans la partie supérieure du réacteur. Cette technologie de filtration est décrite dans de nombreux textes, par exemple US 5,527,473 ou WO 10074761. Elle peut également mettre en oeuvre une boucle externe de séparation des cires, telle que décrite par exemple dans les brevets US 5,770,629 ou FR 2 802 828, dans laquelle on prélève dans la section réactionnelle une partie du slurry, puis on effectue une séparation des phases constituant le slurry en deux étapes, une première étape de dégazage, suivie d'une seconde étape au cours de laquelle les cires sont séparées du catalyseur, ce dernier étant alors recyclé dans la section réactionnelle au moyen d'une ligne de recirculation de la phase slurry.

Le catalyseur Fischer-Tropsch est très finement divisé en particules présentant typiquement une taille moyenne de l'ordre de 5 microns à 500 microns, cette taille correspondant au diamètre de la plus petite sphère englobant la particule. La concentration en particules solides de catalyseur Fischer-Tropsch dans la suspension est comprise entre 10 % et 65 % du poids total de ladite suspension.

Grâce à la recirculation importante du liquide dans le réacteur, le réacteur de type colonne à bulles permet d'obtenir une concentration en particules de catalyseur Fischer-Tropsch homogène au sein de la section réactionnelle, réduisant les limitations au transfert de matière de l'extérieur vers l'intérieur des grains de catalyseur

Cependant en fonction des conditions opératoires et du catalyseur utilisé pour la synthèse Fischer-Tropsch, un gradient de concentration en particules de catalyseur peut être observé selon l'axe longitudinal du réacteur. Ce gradient de concentration est également accompagné d'une variation du taux de gaz le long dudit axe, le taux de gaz représentant le pourcentage de volume de gaz dans un volume de milieu triphasique gaz/liquide/solide donné. Cette perte d'homogénéité de la phase solide et de la phase gazeuse dans une colonne à bulles est due à des perturbations de l'hydrodynamique de l'écoulement gaz/liquide dans la section réactionnelle. Ce gradient de concentration en particules de catalyseur au sein de la section réactionnelle conduit à détériorer les performances du procédé en réduisant significativement la productivité en liquide, en augmentant la productivité en composés légers (méthane, éthane, ...) qui sont des produits à faible valeur ajoutée et en réduisant la durée de vie du catalyseur, entraînant un renouvellement de l'inventaire du réacteur plus rapide et par conséquent des coûts opératoires plus importants.

Le brevet US 4 969 988 décrit un procédé d'hydrocraquage de coupes pétrolières lourdes dans une colonne à bulles verticale où les conditions de moussage sont observées. Un composé anti-moussant, mis en solution avec un solvant, est injecté dans une région comprise dans les trois dixièmes supérieurs de la colonne. Ce document enseigne qu'aucun effet significatif sur le moussage n'est observé lorsque l'anti-mousse est injecté avec la charge ou dans la partie inférieure du réacteur pour les procédés d'hydrocraquages des coupes lourdes.

Le brevet US 4 396 495 décrit l'amélioration des performances d'un procédé d'hydrotraitement des « huiles noires » hydrocarbonée comprenant des asphaltènes et des métaux par l'injection d'un anti-moussant de type silicone, les pertes de performances étant dues à la formation de mousse.

La demande de brevet US2010/0242594 et EP 2199369 A1 enseignent enseigne l'utilisation des informations issues de plusieurs mesures de pression, dont une située au dessus du niveau de liquide, afin de mesurer le niveau de liquide dans la section réactionnelle.

Cependant aucun de ces documents ne met en oeuvre un processus de contrôle de l'homogénéité de la concentration en catalyseur dans la section réactionnelle ni de dispositif de maintien de la concentration homogène en catalyseur dans ladite section réactionnelle.

Ainsi, la perte de production en composés liquides à haute valeur ajoutée et les risques de désactivation du catalyseur Fischer-Tropsch ont conduit la demanderesse à rechercher une méthode pour maintenir une concentration en catalyseur homogène dans le ou les réacteurs de type colonne à bulles compris dans ladite section réactionnelle.

## OBJET ET INTÉRÊT DE L'INVENTION

La présente invention a pour objet un procédé de synthèse d'hydrocarbures à partir d'une charge comprenant du gaz de synthèse, dans lequel on met en oeuvre un catalyseur Fischer-Tropsch solide dans une section réactionnelle tri-phasique opérée telle que ledit catalyseur est maintenu en suspension dans une phase liquide par la circulation d'une phase gaz du bas vers le haut de ladite section réactionnelle, caractérisé en ce que l'on effectue les étapes suivantes de manière à contrôler et de maintenir l'homogénéité de la concentration en particules de catalyseur dans la section réactionnelle :

(a) pour tout $i$ compris entre 1 et $n$-1, $n$ représentant le nombre de points de mesure de pression disposés le long de l'axe longitudinal du réacteur et étant au moins égal à 3, on mesure les pressions différentielles $\Delta P_i$ entre deux points de mesure consécutifs de pression distants de $\Delta h_i$ et on calcule les pertes de charge au mètre $\Delta G_i = \Delta P_i / \Delta h_i$,

(b) pour chaque perte de charge au mètre dans ladite suspension de catalyseur dans la phase liquide $\Delta G_j$, on calcule une valeur correspondant à la différence entre deux pertes de charge au mètre consécutives divisée par leur moyenne $(\Delta G_{j+1} - \Delta G_j)/((\Delta G_{j+1} + \Delta G_j)/2)$,

(c) si au moins une des valeurs calculée lors de l'étape (b) est supérieure à 5%, on injecte au moins un additif comprenant au moins un polymère organosilicique au moins en fond de ladite section réactionnelle.

Un objet de la présente invention est de contrôler l'homogénéité de la concentration en catalyseur dans la section réactionnelle et de maintenir un profil de concentration en catalyseur homogène le long de l'axe longitudinal du réacteur par injection d'un additif adéquat.

Les avantages de la présente invention résident dans le fait qu'un contrôle de la concentration en catalyseur dans la section réactionnelle permet de minimiser la quantité d'additif devant être injecté pour améliorer l'homogénéité de la concentration en catalyseur dans le ou les réacteurs compris dans ladite section et de maintenir le taux de gaz dans la section réactionnelle. Cette invention présente également l'avantage de maintenir les performances catalytiques de la synthèse Fischer-Tropsch, limitant ainsi les appoints de catalyseur frais et de maintenir la production en hydrocarbures liquides ayant une haute valeur ajoutée.

## DESCRIPTION DÉTAILLÉE DE L'INVENTION

L'homogénéité de la concentration en particules de catalyseur dans la section réactionnelle est contrôlée en réalisant plusieurs mesures de pression différentielle le long de l'axe longitudinal du réacteur. Par mesure de pression différentielle, on entend la mesure de la différence de pression entre deux points de mesure de pression.

Les mesures de pression sont réalisées au moins une fois, avantageusement à intervalle de temps régulier, et préférentiellement en continu. L'intervalle de temps entre deux mesures de pression est propre à chaque installation, ainsi qu'à son mode de fonctionnement et est déterminé par l'Homme du métier et la technologie disponible. Cet intervalle peut être par exemple de 5 s, de 1 min, de 1 h.

La pression différentielle $\Delta P_i$ est liée à la différence de hauteur $vh_i = h_{i+1} - h_i$ entre deux points de mesure consécutifs de pression, à la constante de gravité $g$ et à la masse volumique moyenne de la phase réactionnelle $\rho_i$ comprise entre lesdits deux points de mesure de pression par la relation (1) suivante :

$$\Delta P_i = \rho_i \times g \times \Delta h_i \quad (1)$$

$i$ étant un entier naturel compris entre 1 et $n-1$, $n$ représentant le nombre de points de mesure de pression disposés le long de l'axe longitudinal du réacteur et étant au moins égal à 3, le point de mesure 1 étant le plus bas et le point de mesure n étant le plus haut.

La répartition et le nombre de points de mesure de pression le long de l'axe longitudinal du réacteur sont tels que chaque distance entre deux points de mesure consécutifs $\Delta h_i$ est comprise entre 0,5 et 5 m, préférentiellement entre 1 et 3 m.

L'homogénéité de la concentration en particules de catalyseur dans la section réactionnelle est contrôlée en observant les étapes successives suivantes :

(a) pour tout $i$ compris entre 1 et $n-1$, on mesure les pressions différentielles $\Delta P_i$ entre deux points de mesure consécutifs de pression distants de $\Delta h_i$ et on calcule les pertes de charge au mètre $\Delta G_i = \Delta P_i / \Delta h_i$

On compare ensuite les pertes de charges au mètre successives $\Delta G_i$ - $\Delta G_{i+1}$. Si il existe un entier j tel que pour tout k compris entre j et n-1 la valeur de $\Delta G_k$ est inférieure à 20 mbar/m, cela signifie que les points de mesure de pression $k$ et $k+1$ sont situés au dessus de l'interface gaz/slurry. Dans ce cas, les mesures issues des points de mesure de pression $j$ à $n$ sont exclues du calcul des pertes de charge au mètre et on ne prend en compte que les pertes de charge au mètre $\Delta G_1$ à $\Delta G_{j-2}$, appelées pertes de charge au mètre dans la suspension de catalyseur dans la phase liquide car les points de mesure 1 à j-1 sont tous situés en dessous de l'interface gaz/slurry.

Ainsi, pour contrôler et maintenir l'homogénéité de la concentration en particules de catalyseur dans la section réactionnelle, on observe suite aux étapes (a) et (b) les étapes successives suivantes :

(b) pour chaque perte de charge au mètre dans la suspension de catalyseur dans la phase liquide $\Delta G_j$, on calcule une valeur correspondant à la différence entre deux pertes de charge au mètre consécutives divisée par leur moyenne $(\Delta G_{j+1} - \Delta G_j)/((\Delta G_{j+1} + \Delta G_j)/2)$
(c) si au moins une des valeurs calculée lors de l'étape (b) est supérieure à 5%, préférentiellement est supérieure à 10%, et de manière préférée est supérieure à 20%, on injecte au moins un additif comprenant au moins un polymère organosilicique au moins en fond de ladite section réactionnelle.

Les étapes (a) à (c) sont avantageusement répétées au cours du temps.

À la vue de l'étape (b), on comprend qu'il faut au moins trois points de mesure de pression soient situés en dessous de l'interface gaz/slurry.

Par concentration homogène en particules de catalyseur dans la section réactionnelle, on entend au sens de la présente invention que chaque différence entre deux pertes de charge au mètre dans la suspension de catalyseur dans la phase liquide consécutives divisée par la moyenne des deux considérées $(\Delta G_{j+1} - \Delta G_j)/((\Delta G_{j+1} + \Delta G_j)/2)$ est inférieure à 5%, de préférence inférieure à 10% et plus préférentiellement inférieure à 20%. Par contrôler, on entend le suivi dans le temps et la correction, si nécessaire, des pertes de charges au mètre successives. Ce suivi dans le temps est directement dépendant de la fréquence de mesure de pression. Par maintenir, on entend que si la concentration en particules de catalyseur dans la section réactionnelle est homogène au sens de la présente invention, alors on applique les moyens exposés dans la présente invention pour que chaque différence entre deux pertes de charge au mètre dans la suspension de catalyseur dans la phase liquide consécutives divisée par la moyenne des deux considérées $(\Delta G_{j+1} - \Delta G_j)/((\Delta G_{j+1}, + \Delta G_j)/2)$ reste inférieure à 5%, de préférence inférieure à 10% et plus préférentiellement inférieure à 20%. Conformément à l'invention, ledit additif injecté comprend au moins un polymère organosilicique. De préférence, ledit polymère organosilicique est choisi dans la famille des silicones. Préférentiellement, ledit polymère organosilicique est choisi parmi les polymères siloxanes. De manière préférée, ledit polymère organosilicique est le polydiméthylsiloxane (PDMS).

Ledit additif peut avantageusement être chauffé afin de diminuer sa viscosité et faciliter ainsi son injection. Par faciliter, on entend que l'injection est réalisée facilement par des moyens classiques connus de l'Homme du métier (pompes par exemple).

Ledit additif peut également avantageusement être injecté en mélange avec un solvant, ce dernier ayant pour effet de diminuer la viscosité dudit additif, facilitant ainsi son injection dans la section réactionnelle.

Ledit solvant est choisi parmi les produits de la synthèse Fischer-Tropsch. De préférence, le solvant utilisé sera la fraction légère des produits issus de la synthèse Fischer-Tropsch, liquide aux conditions où le mélange additif/solvant est injecté. La fraction légère est la fraction hydrocarbonée en phase gaz dans les conditions opératoires de la section réactionnelle qui est éliminée en tête du réacteur puis séparée dans une section de séparation gaz/liquide. Ladite fraction comprend typiquement des molécules hydrocarbonées comprenant de 4 à 30 atomes de carbone.

Conformément à l'invention, ledit additif est injecté au moins en fond de la section réactionnelle, de préférence directement au sein de la phase slurry afin d'assurer une dispersion optimale de l'additif dans la section réactionnelle grâce à l'agitation induite par le bullage de la phase gaz. Préférentiellement, ledit additif est introduit au contact direct de la phase slurry par les branches des points de mesure de pression ou par la ligne de recirculation de la phase slurry, et plus préférentiellement ledit additif sera injecté dans la ligne de recirculation de la phase slurry, au contact direct de ladite phase.

Par fond de ladite section réactionnelle, on entend la région comprise dans les deux tiers inférieurs de la section réactionnelle, préférentiellement la région comprise dans le tiers inférieur de la section réactionnelle.

L'injection de l'additif peut avantageusement être effectuée sous forme d'injection discontinue dès que la concentration en particules de catalyseur dans la section réactionnelle n'est plus homogène au sens de la présente invention.

Selon un autre mode de réalisation, l'injection de l'additif peut avantageusement être faite sous forme d'injection continue afin de maintenir en continu une concentration homogène en particules de catalyseur dans la section réactionnelle.

Quelque soit le mode d'injection préféré, ledit additif est injecté à une pression supérieure à la pression opératoire de la section réactionnelle. Ceci permet d'éviter le bouchage des lignes d'injection dû à une accumulation de catalyseur. Les lignes d'injection de l'additif sont avantageusement équipées d'un système de purge sous haute pression d'inerte, par exemple l'azote ou des produits issus de la synthèse Fisher-Tropsch, avantageusement ladite fraction légère pouvant également être utilisée comme solvant pour la dilution de l'additif.

Le débit dudit additif est déterminé expérimentalement en fonction des conditions opératoires du procédé de façon à minimiser la quantité d'additif injectée dans la section réactionnelle tout en maintenant la concentration en catalyseur homogène dans le réacteur.

Suite à l'injection de l'additif dans la section réactionnelle, dont l'effet apparait après une durée de l'ordre de la minute, un nouveau calcul des pertes de charge au mètre $\Delta G_i$ est effectué. Si chaque différence entre deux pertes de charge au mètre dans la suspension de catalyseur dans la phase liquide consécutives divisée par la moyenne des deux $(\Delta G_{j+1} - \Delta G_j)/((\Delta G_{j+1} + \Delta G_j)/2)$ est inférieure à 5%, de préférence inférieure à 10%, et plus préférentiellement inférieure à 20% alors le débit ou la quantité d'additif injecté est satisfaisante.

**DESCRIPTION DE LA FIGURE**

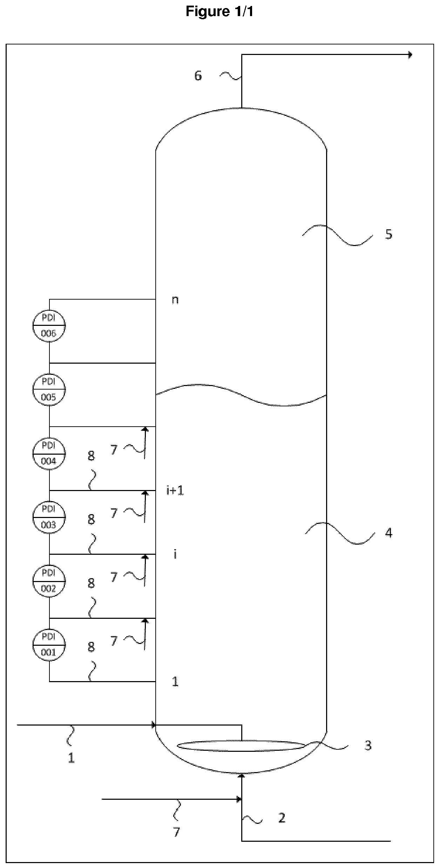

La figure 1 illustre l'invention sans en limiter la portée.

Le gaz de synthèse comprenant du monoxyde de carbone et de l'hydrogène, est amené via une conduite (1) et un distributeur (3) dans la partie inférieure du réacteur Fischer-Tropsch de type colonne à bulles (slurry bubble column) rempli en partie au moyen d'une coupe hydrocarbonée, de manière à maintenir un catalyseur Fischer-Tropsch en suspension, formant un slurry (4).

Le catalyseur est sous forme de petites particules de diamètre compris entre 5 et 500 $\mu$m, ce qui réduit les limitations de transfert. Le slurry (4) est mélangé en continu de manière à former une phase homogène qui permet d'avoir une température identique en tout point dudit slurry, d'avoir une faible perte de charge sur la section réactionnelle, et de pouvoir renouveler en continu l'inventaire du catalyseur par déchargement du catalyseur contenu dans la section réactionnelle et chargement de catalyseur frais.

Le gaz formé ou n'ayant pas réagi au cours de la réaction est séparé dans la section de désengagement (5) située au dessus du niveau du slurry dans le réacteur Fischer-Tropsch, puis sort dudit réacteur par la conduite (6).

L'additif est injecté, éventuellement chauffé et/ou éventuellement en mélange avec un solvant par une conduite (7). Ladite conduite (7) peut être reliée à la ligne de recirculation de slurry (2) et/ou à une ou plusieurs branches de points de mesure de pression (8).

Le nombre de branches de points de mesure de pression peut varier et n'est en aucun cas limité au nombre de branches représentées sur la figure 1. De même, l'emplacement des conduites d'injection d'additif (7) ne sont pas limitées à celles représentées sur la figure 1.

**EXEMPLES**

Dans les conditions opératoires de la synthèse Fischer-Tropsch, conduite en présence d'un catalyseur à base de Cobalt de diamètre moyen 80 $\mu$m à une température de 220°C à 20 bara, il a été observé un gradient de pression différentielle le long de l'axe longitudinal d'une colonne à bulles slurry. Les 4 capteurs de pression sont répartis de manière homogène, la distance entre deux capteurs consécutifs étant de 1 m. Le tableau 1 résume les mesures de pertes de charge au mètre observées expérimentalement.

**Tableau 1: Mesure de la perte de charge au mètre le long de l'axe longitudinal du réacteur**

| | | |
|---|---|---|
| $\Delta G_1$ | [mbar/m] | 58 |
| $\Delta G_2$ | [mbar/m] | 48 |
| $\Delta G_3$ | [mbar/m] | 38 |

Toutes les pertes de charge au mètre calculées sont dans la suspension de catalyseur dans la phase liquide. On calcule ensuite les différences entre les pertes de charge au mètre dans la suspension de catalyseur dans la phase liquide consécutives divisée par la moyenne des deux:

$$(\Delta G_1 - \Delta G_2)/(\Delta G_1 + \Delta G_2)*2 = 19\%$$

$$(\Delta G_2 - \Delta G_3)/(\Delta G_2 + \Delta G_3)*2 = 23\%$$

Afin de maintenir un profil de concentration de catalyseur dans le réacteur homogène, une injection d'additif dans le réacteur a été effectué. Le tableau 2 résume les mesures de pertes de charge au mètre observées expérimentalement, une minute après l'injection.

**Tableau 2: Mesure de la perte de charge au mètre le long de l'axe longitudinal du réacteur après injection d'additif**

| $\Delta G_1$ | [mbar/m] | 58 |
|---|---|---|
| $\Delta G_2$ | [mbar/m] | 56 |
| $\Delta G_3$ | [mbar/m] | 54 |

On calcule de nouveau les différences entre les pertes de charge au mètre successives sur la moyenne des deux:

$$(\Delta G_1 - \Delta G_2)/(\Delta G_1 + \Delta G_2)*2 = 4\%$$

$$(\Delta G_2 - \Delta G_3)/(\Delta G_2 + \Delta G_3)*2 = 4\%$$

## Revendications

1. Procédé de synthèse d'hydrocarbures à partir d'une charge comprenant du gaz de synthèse, dans lequel on met en oeuvre un catalyseur Fischer-Tropsch solide dans une section réactionnelle tri-phasique opérée telle que ledit catalyseur est maintenu en suspension dans une phase liquide par la circulation d'une phase gaz du bas vers le haut de ladite section réactionnelle, **caractérisé en ce que** l'on effectue les étapes suivantes de manière à contrôler et de maintenir l'homogénéité de la concentration en particules de catalyseur dans la section réactionnelle :

    (a) pour tout *i* compris entre 1 et *n*-1, *n* représentant le nombre de points de mesure de pression disposés le long de l'axe longitudinal du réacteur et étant au moins égal à 3, on mesure les pressions différentielles $\Delta P_i$ entre deux points de mesure consécutifs de pression dis-

tants de $\Delta h_i$ et on calcule les pertes de charge au mètre $\Delta G_i = \Delta P_i / \Delta h_i$,
    (b) pour chaque perte de charge au mètre dans ladite suspension de catalyseur dans la phase liquide $\Delta G_j$, on calcule une valeur correspondant à la différence entre deux pertes de charge au mètre consécutives divisée par leur moyenne $(\Delta G_{j+1} - \Delta G_j)/((\Delta G_{j+1} + \Delta G_j)/2)$,
    (c) si au moins une des valeurs calculée lors de l'étape (b) est supérieure à 5%, on injecte au moins un additif comprenant au moins un polymère organosilicique au moins en fond de ladite section réactionnelle.

2. Procédé selon la revendication 1 tel que les étapes (a) à (c) sont répétées au cours du temps.

3. Procédé selon l'une des revendications 1 à 2 tel que ledit additif est injecté en mélange avec un solvant choisi parmi les produits de la synthèse Fischer-Tropsch.

4. Procédé selon l'une des revendications 1 à 3 tel que ledit additif est injecté au niveau des branches des capteurs différentiels de pression.

5. Procédé selon l'une des revendications 1 à 4 tel que ledit additif est injecté dans la ligne de recirculation de la phase slurry.

6. Procédé selon l'une des revendications 1 à 5 tel que ledit additif est injecté sous forme d'injection discontinue dès que la concentration en particules de catalyseur dans la section réactionnelle n'est plus homogène au sens de la présente.

7. Procédé selon l'une des revendications 1 à 5 tel que ledit additif est injecté sous forme d'injection continue afin de maintenir en continu une concentration homogène en particules de catalyseur dans la section réactionnelle.

8. Procédé selon l'une des revendications 1 à 7 tel que si au moins une des valeurs calculée lors de l'étape (c) est supérieure à 10%, on injecte au moins un additif comprenant au moins un polymère organosilicique au moins en fond de ladite section réactionnelle

9. Procédé selon l'une des revendications 1 à 7 tel que si au moins une des valeurs calculée lors de l'étape (c) est supérieure à 20%, on injecte au moins un additif comprenant au moins un polymère organosilicique au moins en fond de ladite section réactionnelle.

## Patentansprüche

1. Verfahren zur Synthese von Kohlenwasserstoffen aus einem Einsatzmaterial, das Synthesegas umfasst, wobei ein fester Fischer-Tropsch-Katalysator in einem dreiphasigen Reaktionsabschnitt eingesetzt wird, der so betrieben wird, dass der Katalysator durch das Zirkulieren einer Gasphase des Reaktionsabschnittes von unten nach oben in einer flüssigen Phase in Suspension gehalten wird, **dadurch gekennzeichnet, dass** die folgenden Schritte derart durchgeführt werden, um die Homogenität der Konzentration an Katalysatorteilchen in dem Reaktionsabschnitt zu kontrollieren und aufrechtzuerhalten:

   (a) für alle $i$ zwischen 1 und $n$-1, wobei $n$ die Anzahl an Druckmesspunkten, die entlang der Längsachse des Reaktors angeordnet sind, darstellt und mindestens gleich 3 ist, werden die Differenzdrücke $\Delta P_i$ zwischen zwei aufeinanderfolgenden Druckmesspunkten, die um $\Delta h_i$ beabstandet sind, berechnet und es werden die Druckverluste pro Meter $\Delta G_j = \Delta P_j/\Delta h_j$, berechnet,
   (b) für jeden Druckverlust pro Meter in der Katalysatorsuspension in der flüssigen Phase $\Delta G_j$ wird ein Wert berechnet, der der Differenz zwischen zwei aufeinanderfolgenden Druckverlusten pro Meter entspricht, der durch ihren Mittelwert $(\Delta Gj_{+1} - \Delta Gj)/((\Delta G_{j+1} + \Delta Gj)(2$, dividiert wird,
   (c) wenn mindestens einer der Werte, die in Schritt (b) berechnet werden, größer als 5 % ist, wird mindestens ein Additiv, das mindestens ein siliciumorganisches Polymer umfasst, mindestens am Boden des besagten Reaktionsabschnitts eingespritzt.

2. Verfahren nach Anspruch 1, wobei die Schritte (a) bis (c) im Laufe der Zeit wiederholt werden.

3. Verfahren nach einem der Ansprüche 1 bis 2, wobei das Additiv in Mischung mit einem Lösungsmittel eingespritzt wird, das aus den Produkten der Fischer-Tropsch-Synthese ausgewählt wird.

4. Verfahren nach einem der Ansprüche 1 bis 3, wobei das Additiv an den Zweigen der Differenzdrucksensoren eingespritzt wird.

5. Verfahren nach einem der Ansprüche 1 bis 4, wobei das Additiv in die Umlaufleitung der Aufschlämmungsphase eingespritzt wird.

6. Verfahren nach einem der Ansprüche 1 bis 5, wobei das Additiv in Form von diskontinuierlichem Einspritzen eingespritzt wird, sobald die Konzentration an Katalysatorteilchen in dem Reaktionsabschnitt nicht mehr homogen ist, wie hierin definiert.

7. Verfahren nach einem der Ansprüche 1 bis 5, wobei das Additiv in Form von kontinuierlichem Einspritzen eingespritzt wird, um kontinuierlich eine homogene Konzentration an Katalysatorteilchen in dem Reaktionsabschnitt aufrechtzuerhalten.

8. Verfahren nach einem der Ansprüche 1 bis 7, wobei, wenn mindestens einer der Werte, die in Schritt (c) berechnet werden, größer als 10% ist, mindestens ein Additiv, das mindestens ein siliciumorganisches Polymer umfasst, mindestens am Boden des besagten Reaktionsabschnitts eingespritzt wird.

9. Verfahren nach einem der Ansprüche 1 bis 7, wobei, wenn mindestens einer der Werte, die in Schritt (c) berechnet werden, größer als 20 % ist, mindestens ein Additiv, der mindestens ein siliciumorganisches Polymer umfasst, mindestens am Boden des besagten Reaktionsabschnitts eingespritzt wird.

## Claims

1. A process for the synthesis of hydrocarbons from a feedstock comprising synthesis gas, in which a solid Fischer-Tropsch catalyst is used in a three-phase reaction section operated in such a way that said catalyst is maintained in suspension in a liquid phase by the circulation of a gaseous phase from the bottom upwardly of said reaction section, **characterised in that** the following steps are carried out in such a way as to monitor and maintain homogeneity of the concentration of catalyst particles in the reaction section:

   (a) for every i between 1 and n-1, n representing the number of pressure measurement points disposed along the longitudinal axis of the reactor and being at least equal to 3, the differential pressures $\Delta P_i$ between two consecutive measurement points spaced by $\Delta h_i$ are measured and the pressure drops per metre $\Delta G_i = \Delta P_i/\Delta h_i$ are calculated,
   (b) for each pressure drop per metre in said catalyst suspension in the liquid phase $\Delta G_j$ a value is calculated corresponding to the difference between two consecutive pressure drops per metre divided by their mean $(\Delta G_{j+1} - \Delta G_j)/(\Delta G_{j+1} + \Delta G_j)/2)$, and
   (c) if at least one of the values calculated in step (b) is greater than 5% at least one additive comprising at least one organosilicon polymer is injected at least at the bottom of said reaction section.

2. A process according to claim 1 such that steps (a) to (c) are repeated over time.

3. A process according to one of claims 1 and 2 such that said additive is injected mixed with a solvent selected from the products of the Fischer-Tropsch synthesis.

4. A process according to one of claims 1 to 3 such that said additive is injected at the location of the branches of the differential pressure sensors.

5. A process according to one of claims 1 to 4 such that said additive is injected into the line for recirculation of the slurry phase.

6. A process according to one of claims 1 to 5 such that said additive is injected in the form of discontinuous injection as soon as the concentration of catalyst particles in the reaction section is no longer homogeneous in accordance with the present invention.

7. A process according to one of claims 1 to 5 such that said additive is injected in the form of continuous injection so as to continuously maintain a homogeneous concentration of catalyst particles in the reaction section.

8. A process according to one of claims 1 to 7 such that if at least one of the values calculated in step (c) is higher than 10% at least one additive comprising at least one organosilicon polymer is injected at least at the bottom of said reaction section.

9. A process according to one of claims 1 to 7 such that if at least one of the values calculated in step (c) is higher than 20% at least one additive comprising at least one organosilicon polymer is injected at least at the bottom of said reaction section.

**Figure 1/1**

EP 2 740 530 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5252613 A
- EP 0820806 A
- EP 0823470 A
- US 5527473 A
- WO 10074761 A
- US 5770629 A

- FR 2802828
- US 4969988 A
- US 4396495 A
- US 20100242594 A
- EP 2199369 A1